# EUROPÄISCHE PATENTSCHRIFT

(11) **EP 0 908 282 B1**
(45) Veröffentlichungstag und Bekanntmachung des Hinweises auf die Patenterteilung: **13.08.2003**
(21) Anmeldenummer: 98118917.8
(22) Anmeldetag: 07.10.1998
(51) Int. Cl.: B27N 3/22, B30B 15/30

(54) **Verfahren und Vorrichtung zur Beschickung und Entleerung einer Kurztakt- bzw. Beschichtungspresse**
Method and device for charging and discharging a short cycle laminating press
Méthode et appareil pour remplir et vider une presse à stratifier de cycle court

(30) Priorität: 07.10.1997 DE 19744284
(43) Veröffentlichungstag der Anmeldung: 14.04.1999
(73) Patentinhaber: Dieffenbacher Maschinenfabrik Zaisenhausen, 75059 Zaisenhausen (DE); Maschinenfabrik J. Dieffenbacher GmbH & Co., 75031 Eppingen (DE)
(72) Erfinder: Salenz, Dieter, 75031 Eppingen (DE); Rapp, Peter, 75031 Eppingen (DE)
(74) Vertreter: Hartdegen, Anton

(56) Entgegenhaltungen:
- DE-A- 3 246 720
- DE-A- 3 914 866
- DE-A- 19 606 132
- DE-C- 3 503 156
- US-A- 4 424 092

## Beschreibung

Die Erfindung betrifft ein Verfahren zum Beschicken und Entleeren von Kurztakt- bzw. Beschichtungspressen gemäß dem Oberbegriff des Anspruchs 1. Die Erfindung betrifft weiter eine Vorrichtung zur Durchführung des erfindungsgemäßen Verfahrens.

Ein solches Verfahren mit Anlage ist aus der DE 19 11 764 A1 und DE 23 63 795 A1 bekannt. Danach wird für die Transversalbewegungen zum Beschicken der Presse und Ablegen des Preßgutes, dieses am äußeren Rand durch Klemmelemente erfaßt und in den Pressenraum hineingefahren sowie zum Einfahren der Entleereinrichtung in die Kurztakt- bzw. Beschichtungspresse für das Aufnehmen der fertig gepreßten Platte unterschiedliche mechanische Kinematikelemente verwendet, wodurch aufgrund separater Steuerfunktionen der mechanische Aufbau eine größere Anzahl unterschiedlicher Funktionsteile aufweist und somit nicht nur kompliziert, sondern durch die Störanfälligkeit auch wartungsaufwendig und insgesamt kostenaufwendig ist. Unterschiedliche
Breiten B1 und B2 werden durch unterschiedliches Heranfahren der Klemm- und Tragelemente ausgeglichen, allerdings mit dem Nachteil, daß bei dünnem breiten Preßgut durch das Eigengewicht des Preßgutes der Durchhang so groß wird, daß das Preßgut mit der unteren Fläche oder der Folie auf dem Preßblech der unteren Preß/Heizplatte schleift und dadurch das Produkt geschädigt wird. Das Problem wird zum Teil dadurch gelöst, daß man den Abstand zur Preß-/Heizplatte höher einstellt, welches wiederum nachteilig beim Ablegen des Preßgutes aufgrund größer werdender Fall-(Ablege-)-höhen und der damit verbundenen Gefahr einer Preßgutund oder Folienverschiebung auf der Trägerplatte ist. In der Praxis wird zur Behebung dieses Problems nunmehr der Angriffspunkt der oberen Klemmrolle gegenüber den Tragelementen soweit nach außen verschoben, daß das Preßgut entsprechend der Biegelinie verformt wird, um ein Schleifen des Preßgutes zu verhindern. Nachteilig wirkt sich bei dieser Klemmung besonders bei dünnem Preßgut mit empfindlichen Folien die Gefahr von Klemmarkierungen aus. Das heißt, das Produkt ist in der Oberflächenqualität geschädigt.

Das Problem des Durchhanges bei dünnen und breiten Preßpaketen wurde mit DE 39 14 866 A1 dadurch gelöst, daß die Tragleisten je nach Breite B1 oder B2 und dem Durchhangsverhalten unter das Preßgut gemäß Einfahrweg transversal eingefahren werden und mittels der auf den Tragleisten angeordneten Trag- und Transportbänder in die Presse hineingefahren werden. Nachteilig ist die durch die Tragbänder konzeptionell bedingte größere Ablegehöhe. Weiterhin sind extrem hohe positive und negative Beschleunigungen zur Verkürzung der mechanischen Beschickzeiten nicht möglich, weil sich das Preßgutpaket sich bei Überschreitung der Haftreibung durch die angreifenden Kräfte verschiebt. Beschick- und Entleereinrichtungen von Kurztaktpressen nach den DE 28 47 273 A1 und DE 32 46 720 A1 arbeiten, indem die Greiferklemmleisten und Saugerleistenwerkzeuge jeweils mit dem gleichen Parallelogrammlenkersystem angetrieben werden. Die zumeist pneumatisch ausschwenkbaren Lenkarme folgen einer Sinusbewegung, wodurch die Beschleunigungsabläufe und Abbremsvorgänge mit zum Teil zusätzlichen Dämpfungselementen in den Endlagen der Preßgutablage bzw. -aufnahme nicht mehr exakt wiederholbar sind. Insbesondere trifft dies zu bei unterschiedlichen Formatbreiten mit Auswirkungen auf die Wegstrecken und die Arbeitsgeschwindigkeiten, besonders bei Transversalbewegungen im notwendigen Millisekundenbereich. Nachteilig ist bei diesen Schwenkarmsystemen weiter, daß der Ausgleich größerer Formatbreitenunterschiede größere Hebellängen und somit größere Schwungmassenkräfte zur Folge hat.

Nach einem weiteren Schutzrecht DE 35 03 156 A1 wird das transversale Einfahren der Tragleisten mit unterschiedlichem Durchhangsverhalten des Preßgutpaketes konzeptionell ähnlich vorteilhaft wie nach DE 39 14 866 A1 gelöst, mit dem Unterschied, daß das Preßgutpaket auf dieser Tragleiste in die Presse eingefahren wird, wobei während der Einfahr- (Beschick-) -bewegung das Preßgutpaket durch Vakuum-Ansaugdüsen auf der Tragfläche der Tragleisten fixiert bleibt, mit dem Nachteil, daß bei hohen Beschleunigungs- und Bremskräften zur Verkürzung der mechanischen Beschickzeiten nur die untere Folie fixiert bleibt und die darüber liegende Spanplatte mit Oberfolie sich verschieben kann, welches bei einer Doppelfolienbelegung noch kritischer wird. Ein schnelles Einfahren des Preßgutes in den Pressenraum ohne Ablösen oder Verschieben der oberen Folie wird damit unmöglich.

Der Erfindung liegt die Aufgabe zugrunde ein Verfahren anzugeben, daß bei unterschiedlichem Durchhangsverhalten des Preßgutpaketes dieses auch bei extrem hohen ± Beschleunigungskräften zur Reduzierung der mechanischen Beschickzeiten ohne Verschiebung des Preßgutpaketes zerstörungsfrei in die Kurztakt- bzw. Beschichtungspresse eingefahren und folienverzugsfrei sicher auf die untere Preßplatte abgelegt werden kann und somit die mechanische Beschick- und Entleerzeiten, also die Produktionszeiten insgesamt, reduziert werden können.

Die Lösung dieser Aufgabe ist für das Verfahren im kennzeichnenden Teil der Ansprüche 1, 2 und 3 angegeben, während die Lösung für die Vorrichtung aus den Ansprüchen 5 und 6 hervorgeht.
Die Lösung dieser Aufgabe für das Verfahren besteht darin, daß die Klemm- und Entleereinrichtung der Beschick- und Entleerwagen, das heißt, daß die erfindungsgemäße Vorrichtung als Ganzes für eine schnelle Ein- und Ausfahrt sowie eine gute
Aufnahme des Preßgutes soweit quer zur Längsmitte in den Pressenraum ragend einfahrbar sind, daß das Preßgut von auf beiden Längsseiten entsprechend seiner Breite weit in den Pressenraum ragenden und unterstützenden Tragelementen getragen wird und so eine weitgehendst durchbiegungsfreie Auflage für die Einfahrt findet. Dadurch können Preßpakete und die fertigen Platten mit beliebigen Breiten schonend und schnell transportiert werden.

Das erfindungsgemäße Verfahren und die erfindungsgemäße Vorrichtung weisen gegenüber dem Stand der Technik auch folgende Vorteile auf:
Durch die optimale Unterstützung des Preßgutpaketes mittels wählbar weit in den Pressenraum reichenden, das Preßgutpaket unterfassenden Tragbalken und zusätzlicher Klemmung durch die Klemmbalken können auch sehr breite und dünne (zum Beispiel nur 3 mm dicke) Preßgutpakete schonend, ohne nennenswerten Durchhang in die Kurztakt- bzw. Beschichtungspresse hineintransportiert und auch bei Verwendung von extrem dünnen Leichtgewichtfolien faltenfrei abgelegt werden. Im Vergleich zum Stand der Technik, wo das Klemmsystem durch größere Klemmkräfte ein Durchrutschen des Preßgutpaketes durch das Eigengewicht auf die Preßheizplatte durch Biegeverformung einen zu großen Durchhang verhindern muß, braucht der Klemmechanismus gemäß der Erfindung lediglich die dynamischen, horizontal auf das Preßgut wirkenden Kräfte bei extrem steilen Beschleunigungs- und Bremsrampen der Fahrbewegung der Beschickeinrichtung aufbringen, da das Preßgutpaketgewicht optimal durch die Auflageflächen aufgenommen wird.

Die Hubbewegung der Saugeinrichtungen wird in vorteilhafterweise von einem Aktiv-Saugersystem, ohne zusätzliche mechanische Komponenten durchgeführt, wobei die Saugeinrichtung selbst Ansaug- und Hubvorgang ausführen. Um den Installationsaufwand zu beschränken, sind Aktiv-Saugersysteme bzw. Injector-Venturidüsen vorgesehen. Dadurch genügt die Versorgung der Saugeinrichtungen mit Preßluft.
Durch die vorteilhafte kinematischen Maßnahmen und konstruktiven Ausgestaltungen der Vorrichtungen wurden zwischen Rollenführungen für die Führungsschienen und den Tragholmen Räume geschaffen, in deren Ventile Druckmeßwegaufnehmer und sonstige pneumatische und elektrische Schaltelemente ausreichend Aufnahme finden. Dabei erfolgt die elektrische Versorgung der Einheiten mit einem Bus-System. Ein solches Bus-System kommt mit Maximal zwei bis vier Mini-Leitungen aus, die in den gebildeten Räumen nahezu unsichtbar verlegt werden können. Durch diese Maßnahmen und Ausgestaltungen der Vorrichtung sollen insgesamt die Installationsaufwendungen und übergroße Kabelschleppeinrichtungen für die Versorgung der Beschick- und Entleereinheit vermieden werden.

Um kurze Taktzeiten zu ermöglichen, werden die Longitudinalbewegungen der Beschick- und Entleerwagen mit hohen Geschwindigkeiten betrieben. Um dabei das Aufwehen der oberen Folien bzw. Papiere und das Verrutschen der Preßpakete zu vermeiden, wird in vorteilhafter Weise ein Windschutz an der Stirnseite des Beschickwagens angebracht.
Die kurzen Taktzeiten werden auch dadurch ermöglicht, daß die Öffnungshöhe des Pressenraumes mit bis ≤ 300 mm sehr gering ist. Dies ist dadurch bedingt, weil die ein- und ausfahrenden Vorrichtungsbauteile mit einer ausgesprochen geringen Bauhöhe auszuführen sind. Dafür insbesonders die geringe Bauhöhe der verwendeten Aktiv-Saugheber verantwortlich sind. Dadurch gehen nur kurze Heb- und Senkzeiten der beweglichen Preßplatte in den Preßzyklus ein.

Durch das erfindungsgemäße Verfahren und der erfindungsgemäßen Vorrichtung wird mit relativ geringen Andrückkräften ein Verrutschen des Preßgutpaketes auch bei sehr schnellem Einfahren und sehr kurzen mechanischen Beschickzeiten sicher und ohne Einschränkung der Folienoberflächenqualität verhindert.

Weitere vorteilhafte und zweckmäßige Ausgestaltungen der Erfindung gehen aus der folgenden Beschreibung zu der Zeichnung hervor und sind in den Unteransprüchen angegeben.

Es zeigen:
- Figur 1: den kinematischen Ablauf (a bis e) der erfindungsgemäßen Vorrichtung für die Beschickung und Entleerung einer Kurztaktpresse einer ersten Ausführung,
- Figur 2: den kinematischen Ablauf (a bis c) der erfindungsgemäßen Vorrichtung für die Beschickung und Entleerung einer Kurztaktpresse einer zweiten Ausführung,
- Figur 3: den kinematischen Ablauf (a bis d) der erfindungsgemäßen Vorrichtung für die Beschickung und Entleerung einer Kurztaktpresse einer dritten Ausführung,
- Figur 4: den kinematischen Ablauf (a bis d) der erfindungsgemäßen Vorrichtung für die Beschickung und Entleerung einer Kurztaktpresse einer vierten Ausführung,
- Figur 5: in schematischer Darstellung und Vorderansicht die Vorrichtung der Beschick- und Entleereinrichtung für das erfindungsgemäße Verfahren,
- Figur 6: in Draufsicht und Schnitt A-A die Vorrichtung nach Figur 5,
- Figur 7: die konstruktiven Einzelheiten der Kupplung zur Verbindung der Tragholme vom Beschick- und Entleerwagen,
- Figur 8: den Klemmmechanismus für das Preßpaket in größerem Maßstab und
- Figur 9: zwei Windschutzvorrichtungen.

Die Vorrichtung zur Durchführung des Verfahrens dient der Beschickung und Entleerung von sogenannten Kurztakt- oder Beschichtungspressen in einer Einetagen-Ausführung. Als Mittellagen für die zu beschichtende Platte können, Span-, MDF- und Sperrholzplatten dienen, die mit Melamin- oder
Phenolharzfilmen bzw. -folien, ein- oder beidseitig beschichtet werden. Außerdem ist die Herstellung von reinen Melamin- und Phenolharzfolienpaketen zu Hoch- und Mitteldrucklaminaten möglich.

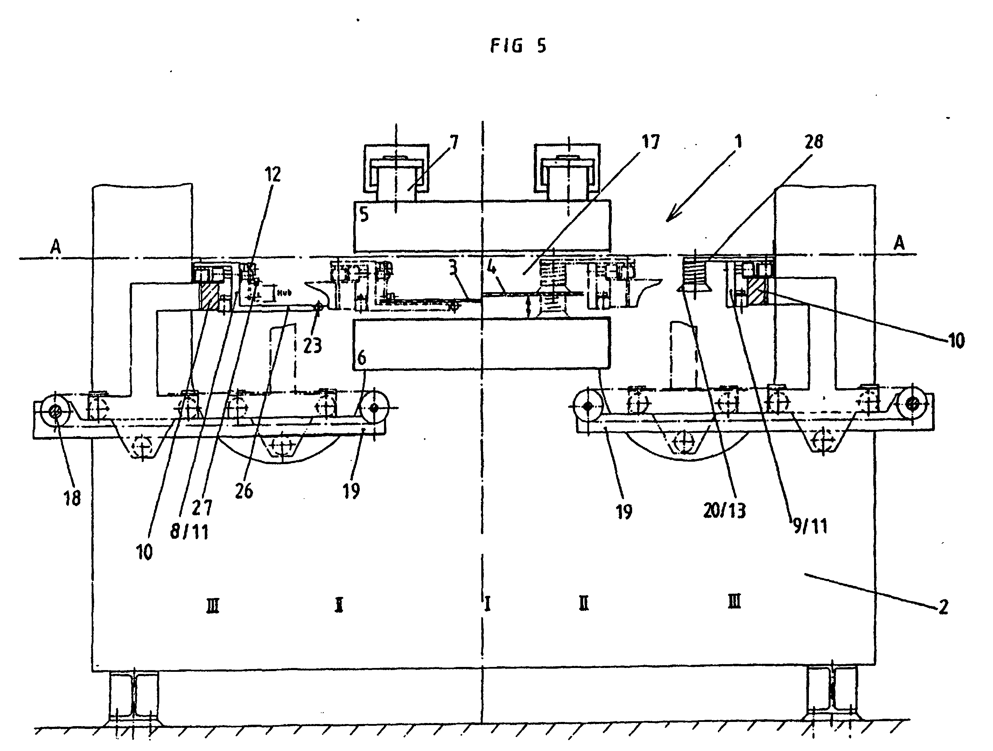

In Figur 5 ist die Presse 1 mit Beschick- und Entleereinrichtungen ausgestattet, die als Klemm- bzw. als Saugeinrichtungen 12 und 13 ausgebildet sind, um Spanplatten, Faserplatten oder dgl. mit an deren Ober- und Unterseite angebrachten Vergütungsauflagen als Preßgut 3 bzw. Preßpaket 3 unter Einwirkung von Druck mittels Preßdruckzylinderkolbenanordnungen 7 und Wärme von beheizten Preß/Heizplatten 5 und 6 zu vergüteten Platten 4 zu pressen. Für das Beschicken und Entleeren der Presse 1 ist ein zwischen dem Beschickbereich 14 und Preßbereich 15, sowie Preßbereich 15 und Entleerbereich 16 verfahrbare, mittels Tragholmen 11 in bzw. an Führungsschienen 10 geführte Transporteinrichtung vorgesehen, an der jeweils an beiden Längsseiten Klemm- und Saugeinrichtungen 12 und 13 angeschlossen sind. Während links der Längsmittenachse I-I die Beschickeinrichtung in der Bereitstellungsachse III-III und beim Ablegen des Preßpaketes 3 im Pressenraum 17 in der Beschickachse II-II strichliert dargestellt ist, ist die Entleereinrichtung rechts der Längsmittenachse I-I beim Aufnehmen der fertigen Platte 4 strichliert in der Entleerachse II-II und in der Bereitstellungsachse III-III eingezeichnet.

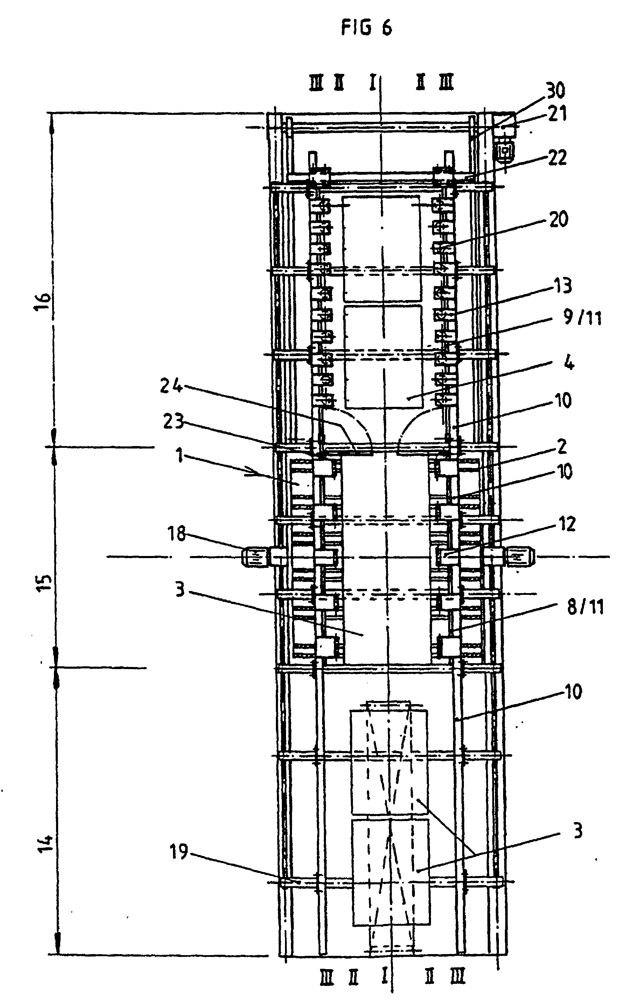

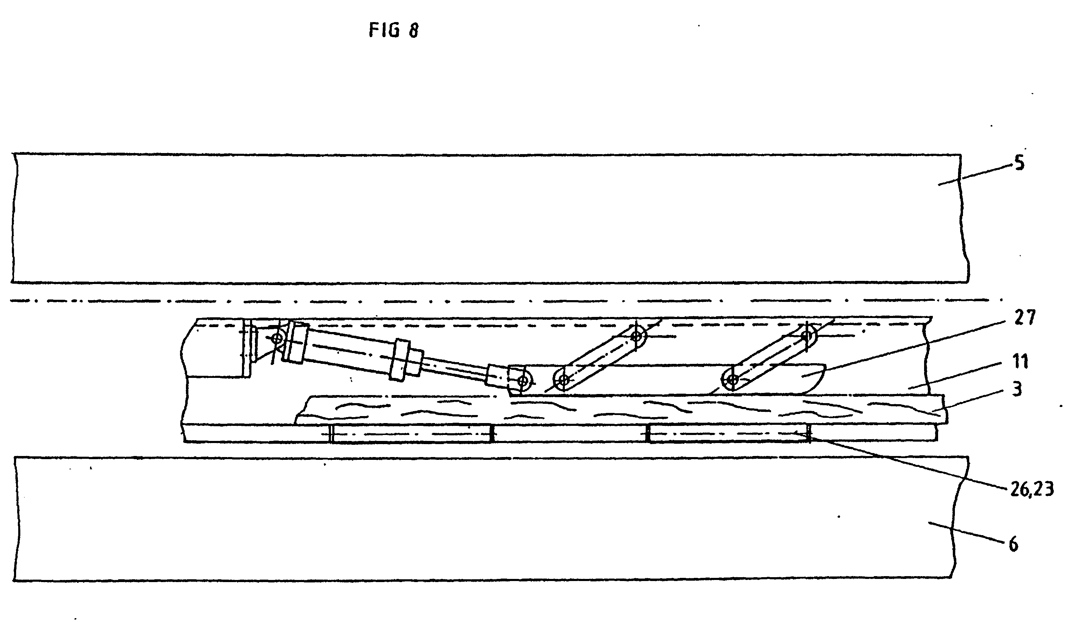

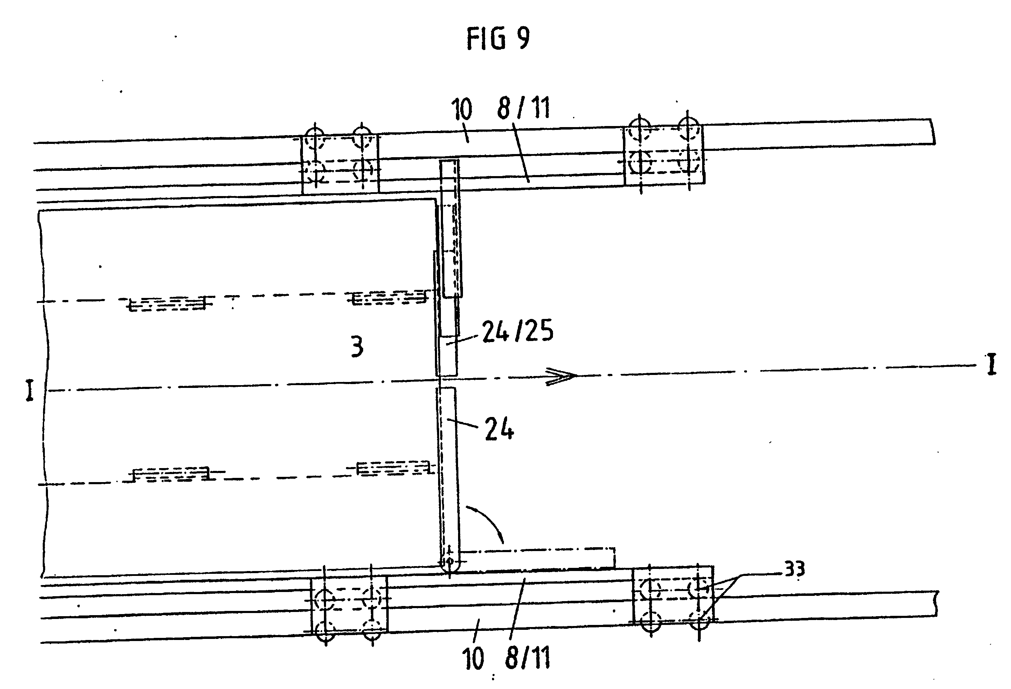

Nach den Figuren 5 bis 8 besteht die Transporteinrichtung für das Beschicken aus einem zweigeteilten, links und rechts der Preß-/Heizplatten 5 und 6 bzw. zwischen Pressenrahmen 2 und den Preß-/Heizplatten 5 und 6 in Führungs-schienen 10 mit den Tragholmen 11 längsverfahrbaren Beschickwagen 8. Der Beschickwagen 8 besteht aus zwei Tragholmen 11, an denen die
Klemmeinrichtungen 12 mit ihren Tragbalken 26 und den heb- und senkbaren Klemmbalken 27 befestigt sind. Es können viele Tragbalken 26 je Seite mit wählbarem Abstand zueinander vorgesehen sein, wobei an ihren Enden Stützrollen 23 zum besseren Abgleiten der Preßpakete 3 angebracht sind. Die Preßpakete 3 können durch die Tragbalken 26 tief untergriffen werden.
Wobei der Untergriff allein von der Länge der Tragbalken 26 abhängig ist, die jeweils in Abhängigkeit von der Preßgutbreite und -dicke festgelegt wird. Das Verrutschen bzw. das Verschieben der Folien im Preßpaket 3 während des Transports verhindern die Klemmbalken 27. Die Folien werden weiter in vorteilhafter Weise nach Figur 9 gegen Aufwehen durch einen Windschutz 24 gesichert, der als ein ein- und ausschwenkbarer Windschutz 24 oder als ein mit teleskopartig ineinandner verschiebbaren Lamellen 25 ausgebildet ist und der an der Stirnseite des Beschickwagens 8, das heißt in Beschickrichtung vorn, angeordnet ist. Dadurch können höchste Fahrgeschwindigkeiten, zum Beispiel 6 m/s, ohne Aufwehen der Folien gefahren werden. Gleichzeitig kann die lonisierung auf ein Mindestmaß begrenzt werden. Dies ist für ein faltenfreies Verpressen der Folien notwendig. Für große Breitenunterschiede ist der Windschutz teleskopierbar ausgeführt.

Statt vielen Tragbalken 26 mit Stützrollen 23 können auch zwei Längstragleisten pro Längsseite an den Enden der Tragbalken 26 vorgesehen sein, an deren Innenseite die Stützrollen 23 mit Abstand zueinander angebracht sind.
Das Ablegen der in den Pressenraum 17 einfahrenden Preßpakete 3 auf die untere Preß-/Heizplatte 6 erfolgt durch Lösen der Klemmbalken 27, gleichzeitig oder wahlweise zeitversetzt und durch schnelles seitliches Herausfahren der Tragbalken 26, ebenso gleichzeitig oder zeitversetzt. Die Tragbalken 26 werden
aus dem Pressenraum 17 waagrecht herausgefahren, indem die zwei Häften des Beschickwagens 8 mit den Tragholmen 11 und den Führungsschienen 10 in Schnellfahrt nach links und rechts motorisch durch einen Antrieb 18 oder pneumatisch durch Stelltriebe, in Querschienen 19 bewegt werden.

Die Transporteinrichtung für das Entleeren besteht aus einem zweigeteilten, links und rechts der Preß-/Heizplatten 5 und 6 in Führungsschienen 10 mit den Tragholmen 11 längsverfahrbaren Entleerwagen 9.
Der Entleerwagen 9 besteht wieder aus zwei Tragholmen 11, an denen die Saugeinrichtungen 13 mit ihren Tragarmen 28 und den heb- und senkbaren Aktiv-Saugern 20 befestigt sind. Die Anzahl der Aktiv-Sauger 20 je Längsseite und ihr Einfahrweg zur Längsmittenachse I-I wird durch die Breite und Gewicht der Platte 4 bestimmt. Die Aktiv-Sauger 20 können, je nach Länge der Platte 4, unabhängig voneinander, einzeln angehoben und einzeln abgesenkt werden. Dadurch können Platten 4, die sich schlecht von der unteren Preß-/Heizplatte 6 lösen, abgeschält werden. Für den Abschälvorgang müssen zuerst die äußeren Sauger 20 an den Plattenenden angehoben werden. Dadurch gelangt Luft unter die Platte 4 und sie kann vollflächig angehoben werden. Wird mit der Beschichtungsanlage Preßgut von unterschiedlicher Länge hergestellt, so wird bei kurzem Preßgut 3 der Abwärtshub für die nicht benötigten Sauger abgeschaltet. Dadurch wird erhöhter Verschleiß der Aktiv-Sauger 20 durch Aufsetzen auf die Plattenkanten vermieden.

Alternativ dazu können statt der Aktivsauger 20 auch je Seite eine Saugerleiste mit einer festen Anzahl von Saugern zum Einsatz kommen, aber nur dann, wenn der Betreiber der Beschichtungslage durchgehend nur eine Preßpaketgröße herstellen will. Nach dem Absenken der Saugeinrichtungen 13 und Aufnehmen
der fertigen Platte 4 wird der Entleerwagen 9 gemeinsam mit dem Beschick-wagen 8 in einer Schnellfahrt längsverfahren, wobei der Entleerwagen 9 die Platte 4 aus und der Beschickwagen 8 das Preßpaket 3 in den Preßssenraum 17 bringt. Die Longitudinal-Schnellfahrt der Beschick- und Entleerwagen 8 und 9 und ihre Führung mit den Tragholmen 11 in der Führungsschienen 10 wird zweckmäßigerweise mit an den Tragholmen 11 angebrachten, kugelgelagerten Laufrollen 33 durchgeführt.

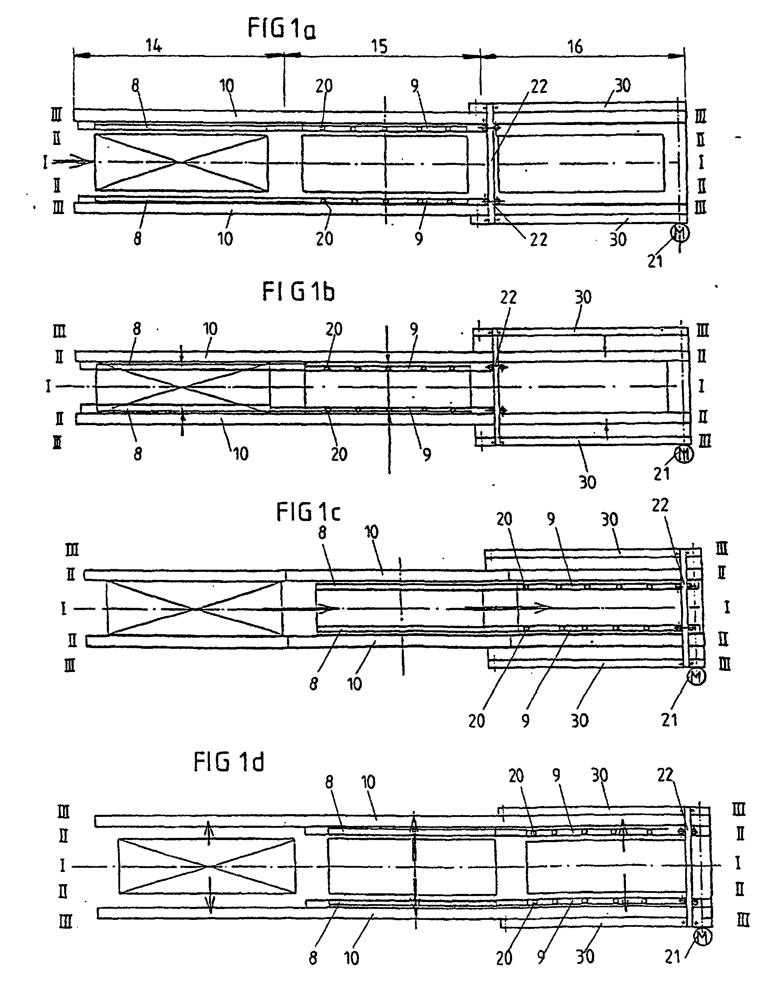

Bei dem bis jetzt beschriebenen ersten Ausführungsbeispiel nach Anspruch 1 und den Figuren 1a bis 1e sind die Führungsschienen 10 und die Tragholme 11 für die Beschickung und Entleerung durchgehend fest miteinander verbunden bzw. sie bestehen links und rechts jeweils aus einem Konstruktionsteil, wobei für die Längsund Querbewegung jeweils ein Antrieb 21 und 18 vorgesehen ist. Die waagrechte Querverschiebung der Führungsschienen 10 mit den Beschick- und Entleerwagen 8 und 9 zum Aufnehmen des Preßpaketes 3' in den Beschick-bereich 14, dem Ausfahren aus dem Preßbereich 15 und Ausfahren aus dem Entleerbereich 16 erfolgt dabei motorisch in gleicher Weise in Querschienen 19.

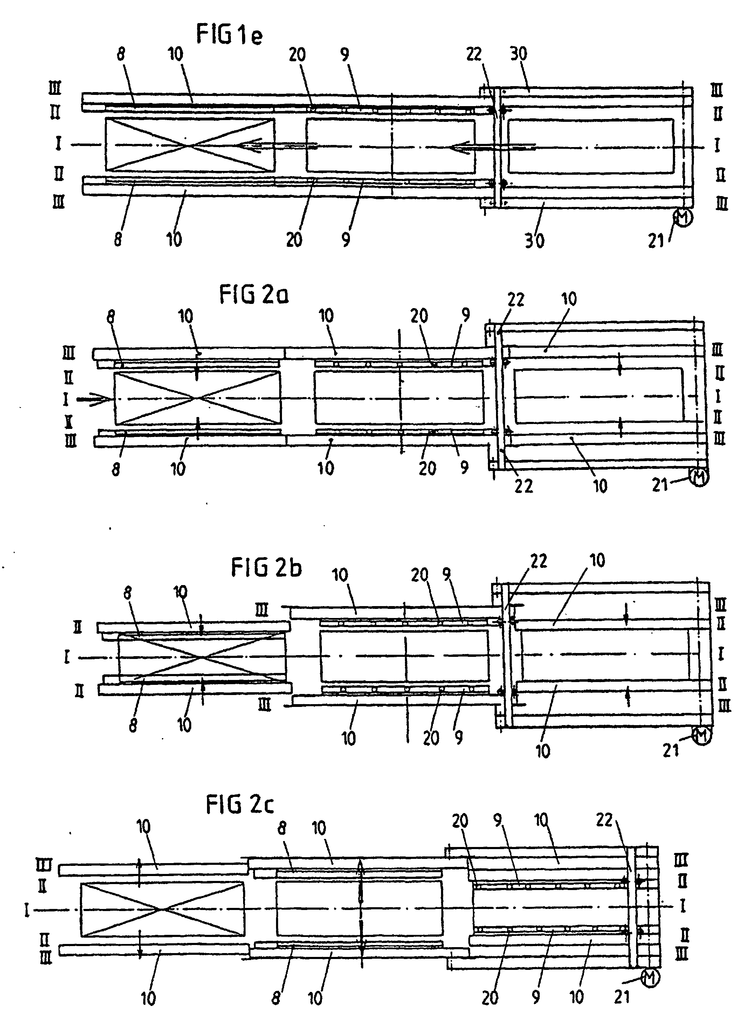

Für die Ausführungsbeispiele nach den Ansprüchen 2 und 3 sowie den Figuren 2 bis 4 sind die Führungsschienen 10 in drei Teile unterteilt, und zwar für den Beschickbereich 14, den Preßbereich 15 und den Entleerbereich 16, während jeweils für den Beschick- und Entleerwagen 8 und 9 zwei Tragholme 11 vorgesehen sind.

Jeder der drei Bereiche ist mit einem eigenen Antrieb 18 für die Querbewegung ausgerüstet. Dadurch wird erreicht, daß die Beschickeinrichtung unabhängig davon ob die Entleerung bereits die Platte 4 abgelegt hat, das neue Preßpaket 3 in der Presse 1 ablegen kann. Das Antreibssystem für die gestellte Aufgabe ist je nach Taktzeitanforderungen, in mehreren Ausführungsbeispielen bzw. Lösungen vorgesehen:

Erstes Ausführungsbeispiel nach den Figuren 1a bis 1e:
Die Beschick- und Entleerwagen 8 und 9 sind miteinander verbunden und durchgehenden Führungsschienen mit Tragholmen 11 mit einem gemeinsamen Antrieb 21 ausgestattet. Sie werden über einen gemeinsamen Antriebsbalken 22 gezogen, der durch Ketten oder Zahnriemen elektromotorisch angetrieben wird. Der Antriebsbalken 22 kann Beschick- oder vorzugsweise entleerseitig angeordnet sein und ist auf einem eigenen Gestell 30 separat geführt.
Die Beschick- und Entleerwagen 8 und 9 sind dabei für die Querbewegung zusätzlich am Antriebsbalken 22 abrollend geführt.
Die Figur 1a zeigt den Beschick- und Entleerwagen 8 und 9 im Beschick- und Preßbereich 14 und 15 in Ausgangsstellung auf der Bereitstellungsachse III-III zum Quereinfahren in die Beschick- und Entleerachse II-II. In Figur 1b ist diese Bewegung bereits ausgeführt dargestellt. Nach der Klemmung des Preßpaketes 3 durch die Klemmeinrichtung 12 und der Aufnahme der fertigen Platte 4 durch die Saugeinrichtung 13 fährt nach Figur 1c die Transporteinrichtung 8, 9, 10, 11, 12 und 13 gemeinsam in den Pressenraum 17 bzw. in den Entleerbereich 16. Nach dem Ablegen der Platte 4 und dem gleichzeitigen Ablegen des Preßpaketes 3, werden die Führungsschienen 10 mit dem davor angebrachten Bauelementen von der Beschickund Entleerachse II-II gemäß Figur 1d in die Bereitstellungsachse III-III zurück querverfahren und entsprechend Figur 1e in die Ausgangslage nach Figur 1a mit den Antriebsbalken 22 zurückgefahren.

Zweites Ausführungsbeispiel mit geteilten, das heißt getrennten Führungsschienen 10 nach den Figuren 2a bis 2c:
Bei dieser Version sind die Beschick- und Entleerwagen 8 und 9 über pneumatische, elektromagnetische oder elektromotorisch angetriebene Kupplungen 29 miteinander für Beschickung und Entlerung verbunden und entkoppelbar. Werden die Kupplungen 29 geöffnet, so können die Beschick- und Entleerwagen 8 und 9 unabhängig voneinander quer verfahren werden. Der nicht angetriebene Teil wird durch Öffnen der Kupplungen 29 gleichzeitig auf den Führungsschienen 10 gegen Verfahren verriegelt Wie die Figuren 2a bis 2 c weiter zeigen können die voneinander getrennten Beschickwagen 8 und Entleerwagen 9 als jeweils eine Transporteinrichtung 8, 9, 10, 11 und 12 oder 13 unabhängig voneinander aus der Bereitstellungsachse III-III in die Beschick -und Entleerachse II-II und zurück querverfahren aber gemeinsam längsverfahren werden. Der Antrieb und der Bewegungsablauf im Preßzyklus erfolgt wie in der ersten Ausführung. Diese Version erlaubt aber höhere Taktzahlen durch die Unabhängigkeit zwischen Beschickung und Entleerung mit Einzelantrieben.

Drittes Ausführungsbeispiel nach den Figuren 3a bis 3d:
Erweiterte Version mit getrennten Regelantrieben für die Beschickung und Entleerung, getrennten Führungsschienen 10 und getrennten Tragholmen 11 sowie mechanischer Synchronisierung der Beschick- und Entleerwagenhälften 8 und 9. Der Antrieb erfolgt über ein oder zwei stationäre Antriebseinheiten 34 je Längsseite, dabei greifen Zahnräder 31 in Zahnstangen 32 an den Beschick- und Entleerwagen 8 und 9 ein. Die Antriebseinheiten 34 sind stationär an der
Presse 1 angeordnet und für die Querbewegung mit dem Antrieb 18 aushebbar und querverfahrbar am Presseneinlauf und Pressenauslauf vorgesehen.

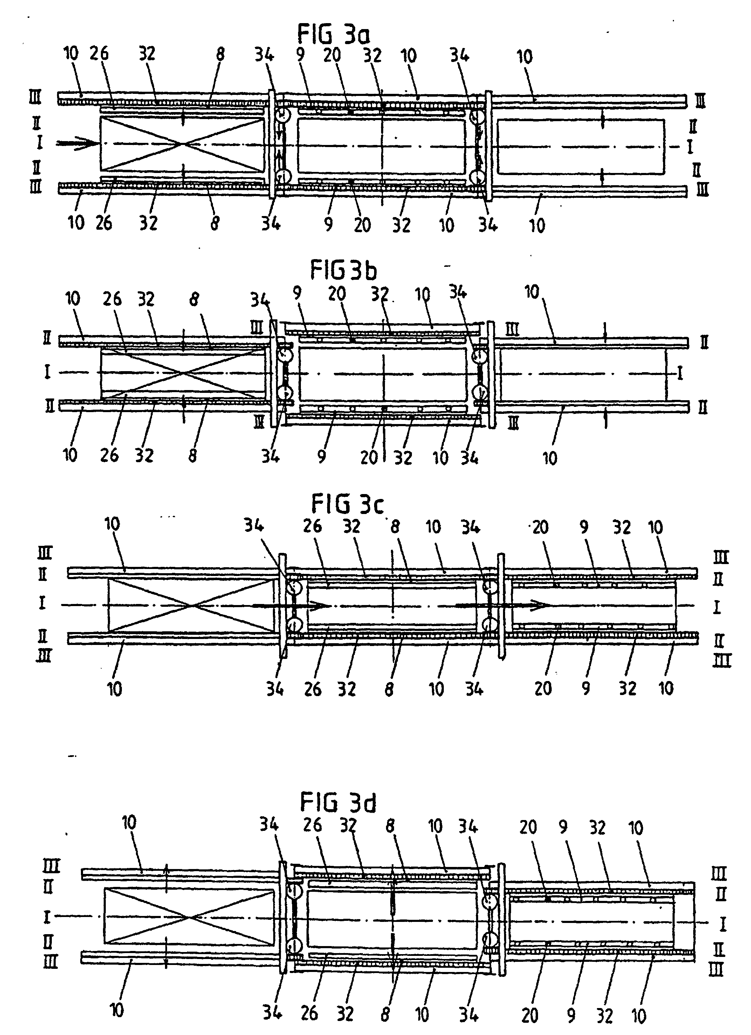

Dafür sind die Beschick- und Entleerwagen 8 und 9 nicht miteinander verbunden. Höhere Flexibilität und kürzere Taktzeiten gegenüber der ersten und zweiten Ausführung sind die Folge. Die Figuren 3a bis 3d zeigen dazu weiter anschaulich die entsprechenden Bewegungsabläufe der Beschickung und Entleerung. In Figur 3a stehen der Beschickwagen 8 und der Entleerwagen 9 in Wartestellung auf den Bereitstellungsachsen III-III. Nach Figur 3b kann der Beschickwagen 8 noch während des Pressens in die Beschickachse II-II quereinfahren und das Preßpaket 3 aufnehmen und klemmen, während der Entleerwagen 9 das Quereinfahren und das gemeinsame Längsfahren erst nach dem Öffnen der Presse 1 vollziehen kann, wie Figur 3c zeigt. In Figur 3d ist die Presse bereits geschlossen und der Beschickwagen 8 aus der Beschickachse II-II in die Bereitstellungsachse III-III querherausgefahren, während der Entleerwagen 9 noch die Platte 4 ablegen kann. Nach dem Ablegen fährt der Entleerwagen 9 ebenfalls aus der Entleerachse II-II in die Bereitstellungsachse III-III und beide können in die Wartestellung nach Figur 3a zurückfahren.

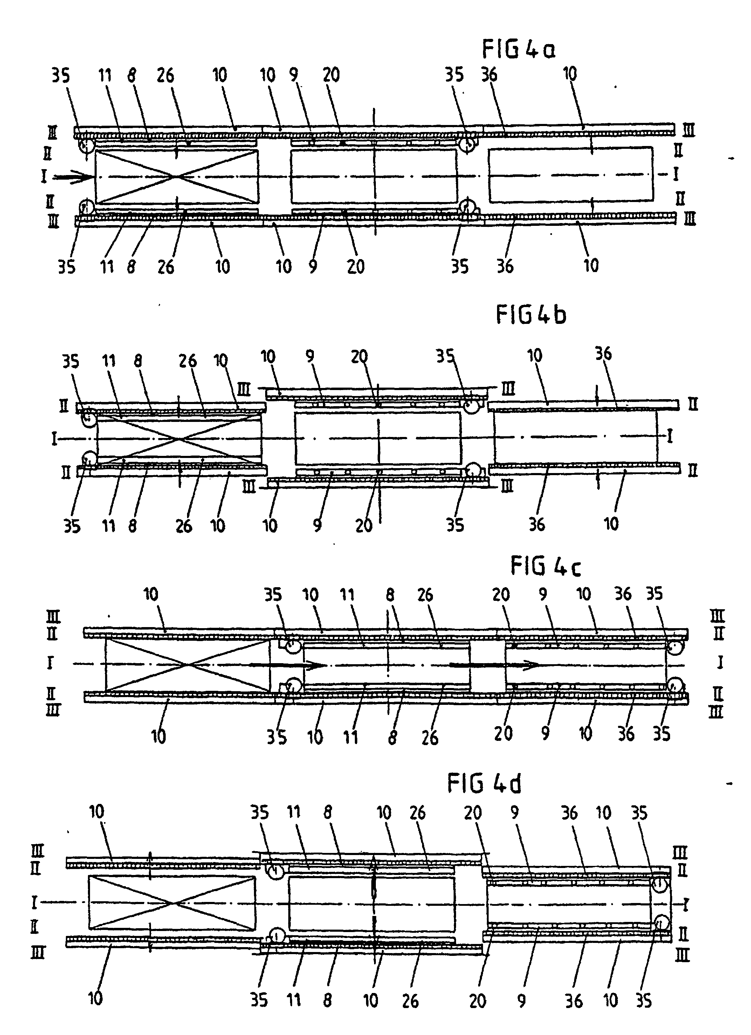

Viertes Ausführungsbeispiel nach den Figuren 4a bis 4d:
Erweiterte Version mit Einzelantrieben und geteilten Führungsschienen 10. Jeder der zwei Beschickwagen- 8 und Entleerwagenhälften 9 ist mit einem eigenen Elektromotor 35 ausgerüstet. Der Antrieb erfolgt über Zahnräder 31 oder Zahnriemenumlauf an einer, an den Führungsschienen 10 angebrachten Zahnstangen 36. Die Synchronisierung der rechten und linken Fahrwagenhälften erfolgt über elektronische Regelachsen oder alternativ über mechanische Ausgleichwellen. Die Bewegungsabläufe der Beschickung, Entleerung, das Quer- und Längsfahren erfolgen entsprechend in der zu Figur 3 geschilderten Weise.

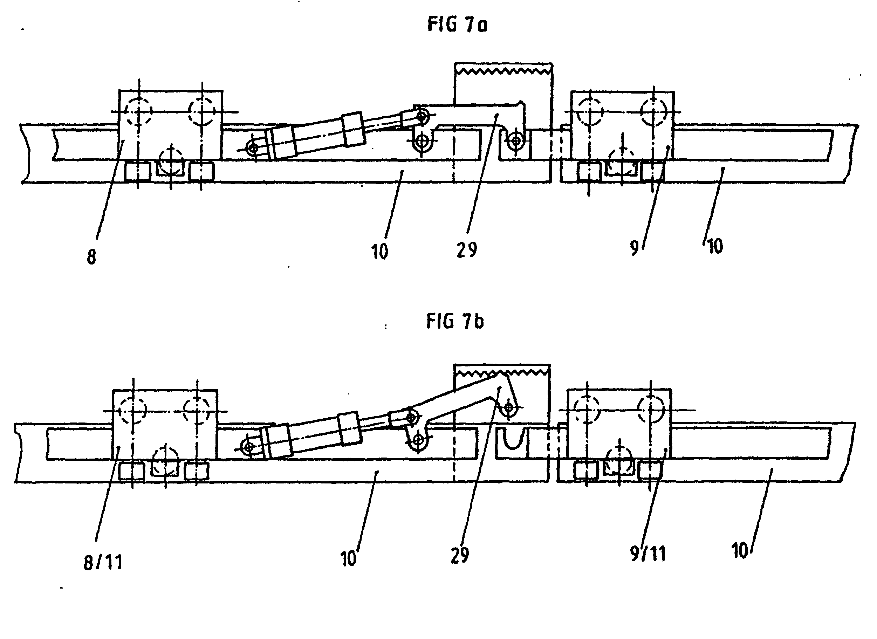

Die Kopplung bei geteilten Führungsschienen 10 nach den Ausführungsbeispielen II, III und IV mit den Figuren 2 bis 4 für Beschick- und Entleervorrichtung erfolgt nach den Figuren 7a und 7b mit einer pneumatisch gesteuerten Klinke 29. In der geschlossenen Stellung sind die Tragholme 11 des Beschickwagens 8 und die Tragholme 11 des Entleerwagens 9 mit einer Arretierklinke 29 gekoppelt. Im entkoppelten Zustand bremst die Klinke 29 über Formschluß/Reibschluß den in dieser Stellung antriebslosen Beschickwagen 8 um eine Bewegung in Längsrichtung zu verhindern. In der entkoppelten Stellung kann die Beschickung unabhängig von der Entleerung eine Querbewegung, zum Beispiel zum Aufnehmen oder Ablegen der Platten 4 durchführen. Um dies zu realisieren, muß allerdings der Antrieb 18 der Querbewegung zwei- oder dreigeteilt werden, das heißt daß entweder an der Schnittstelle Presse-Beschickung oder am Presseneinlauf und -auslauf eine Aufteilung des Antriebes erfolgt

### Bezugszeichenliste

- 1.: Kurztaktpresse
- 2.: Pressenrahmen
- 3.: Preßpaket / Preßgut
- 4.: Platte
- 5.: obere Preß-/Heizplatte
- 6.: untere Preß-/Heizplatte
- 7.: Preßzylinderkolbenanordnungen
- 8.: Beschickwagen
- 9.: Entleerwagen
- 10.: Führungsschienen
- 11.: Tragholme
- 12.: Klemmeinrichtung
- 13.: Saugeinrichtung
- 14.: Beschickbereich
- 15.: Preßbereich
- 16.: Entleerbereich
- 17.: Pressenraum
- 18.: Antrieb (Querbewegung)
- 19.: Querschienen
- 20.: Sauger / Aktivsauger
- 21.: Antrieb (Längsbewegung) (Bsp. I und II)
- 22.: Antriebsbalken
- 23.: Stützrollen
- 24.: Windschutz
- 25.: Lamellen
- 26.: Tragbalken
- 27.: Klemmbalken
- 28.: Tragarme für 20
- 29.: Kupplungen (Klinke)
- 30.: Gestell für 22
- 31.: Zahnräder
- 32.: Zahnstange an 8/9
- 33.: Laufrollen
- 34.: Antriebseinheit für Längsbewegung (Bsp. III)
- 35.: Elektromotor für Längsbewegung (Bsp. IV)
- 36.: Zahnstangen an 10

- I-I: Längsmittenachse
- II-II: Beschick- und Entleerachse
- III-III: Bereitstellungsachse

## Patentansprüche

1. Verfahren zum Beschicken und Entleeren von Kurztakt- bzw. Beschichtungspressen (1) mit geschichtetem Preßgut (3), welches aus Trägerplatten mit ober- und unterseitigen Vergütungslagen aus härtbarem Kunstharz oder härtbaren Kunstharzfolien besteht, bei dem eine zwischen Belegtisch, Presse und Ablagetisch verfahrbare Transporteinrichtung mit Klemm- (12) sowie Saugeinrichtungen (13) vorgesehen ist, die Klemmeinrichtungen das Preßgut an beiden Längsseiten erfassen und in den Pressenraum einfahren sowie unter Ablage des Preßgutes herausfahren, nach dem anschließenden Preßvorgang und Öffnen der Presse die fertige Platte von den eingefahrenen Saugeinrichtungen angesaugt, angehoben und aus dem Pressenraum herausgefahren wird,
**gekennzeichnet durch** die Kombination folgender Verfahrensschritte:
a) das Einfahren und Bereitstellen der Transporteinrichtungen mit den Klemm- und Saugeinrichtungen zur Klemmung des Preßgutes im Beschickbereich und zur Aufnahme der Platte (4) in den Pressenraum (17) erfolgt gleichzeitig und gemeinsam nach dem öffnen des Pressenraumes **durch** beidseitiges waagrechtes Quereinfahren zur Längsmittenachse I-I aus Bereitstellungsachsen III-III in Beschick- und Entleerachsen II-II, wobei die Klemm- und Saugeinrichtungen mit ihren Transporteinrichtungen entsprechend der Breite des Preßgutes verschieden
weit in den Pressenraum quer eingefahren werden bzw. die Beschick- und Entleerachsen II-II variabel zur Längsmittenachse I-I einstellbar ausgeführt sind,
b) das Einfahren- und Ausfahren der Transporteinrichtungen mit den Klemm- und Saugeinrichtungen nach der Klemmung des Preßgutes bzw. der Aufnahme der Platte in bzw. aus den Pressenraum erfolgt gleichzeitig mit einem gemeinsamen Antrieb auf den Beschick- und Entleerachsen II-II,
c) das Ablegen des Preßgutes auf die untere Preß-/Heizplatte und das Ablegen der Platte im Entleerbereich erfolgt gleichzeitig **durch** Lösen der Klemm- bzw. der Saugeinrichtungen und waagrechtes Querausfahren der Transporteinrichtungen mit den Klemm- und Saugeinrichtungen aus dem Preß- bzw. Entleerbereich bzw. von den Beschick- und Entleerachsen II-II in die Bereitstellungsachsen III-III und
d) die Transporteinrichtungen mit den Klemm- und Saugeinrichtungen werden gemeinsam auf den Bereitstellungsachsen III-III in die Ausgangslage für einen neuen Preßzyklus zurückgefahren.

2. Verfahren zum Beschicken und Entleeren von Kurztakt- bzw. Beschichtungspressen (1) mit geschichtetem Preßgut (3), welches aus Trägerplatten mit ober- und unterseitigen Vergütungslagen aus härtbarem Kunstharz oder härtbaren Kunstharzfolien besteht, bei dem eine zwischen Belegtisch, Presse und Ablagetisch verfahrbare Transporteinrichtung mit Klemm (12) sowie Saugeinrichtungen (13) vorgesehen ist, die Klemmeinrichtungen das Preßgut an beiden Längsseiten erfassen und in den Pressenraum einfahren sowie unter Ablage des Preßgutes herausfahren, nach dem anschließenden Preßvorgang und Öffnen der Presse die fertige Platte von den eingefahrenen Saugeinrichtungen angesaugt, angehoben und aus dem Pressenraum herausgefahren wird, insbesondere nach Anspruch 1,
**gekennzeichnet durch** die Kombination folgender Verfahrensschritte:
a) das Einfahren und Bereitstellen der voneinander getrennten zwei Transporteinrichtungen mit den Klemmeinrichtungen bzw. den Saugeinrichtungen in den Beschickbereich bzw. den Pressenraum (17) sowie die Klemmung des Preßgutes und die Aufnahme der Platte (4) erfolgt zeitlich unabhängig voneinander **durch** beidseitiges waagrechtes Quereinfahren zur Längsmittenachse I-I aus Bereitstellungsachsen III-III in Beschick- und Entleerachsen II-II, wobei die Klemm- und Saugeinrichtungen mit ihren Transporteinrichtungen entsprechend der Breite des Preßgutes verschieden weit in den Pressenraum quer eingefahren werden bzw. die Beschick- und Entleerachsen II-II variabel zur Längsmittenachse I-I einstellbar ausgeführt sind,
b) das Einfahren des Preßgutes in und das Ausfahren der Platte aus dem Pressenraum erfolgt gemeinsam und gleichzeitig bei Verbindung der beiden Transporteinrichtungen mit einem Antrieb auf den Beschick- und Entleerachsen II-II,
c) nach Trennung der beiden Transporteinrichtungen erfolgt das Ablegen des Preßgutes auf die untere Preß-/Heizplatte getrennt und unabhängig vom Ablegen der Platte im Entleerbereich **durch** Lösen der Klemmeinrichtungen bzw. der Saugeinrichtungen und waagrechtes getrenntes Querausfahren der Transporteinrichtungen je nach Zeitaufwand aus den Beschick- und Entleerachsen II-II in die Bereitstellungsachsen III-III und
d) nach dem Ausfahren der Beschick-Transporteinrichtung und der Entleer-Transporteinrichtung von den Beschick- und Entleerachsen II-II in die Bereitstellungsachsen III-III werden beide Transporteinrichtungen für einen neuen Preßzyklus wieder verbunden und in die Ausgangslage zurückgefahren sowie anschließend voneinander getrennt.

3. Verfahren nach Anspruch 2,
**dadurch gekennzeichnet, daß** die Beschick-Transporteinrichtung und die Entleer-Transporteinrichtung getrennt und zeitlich unabhängig voneinander mit eigenem Antrieb transversal und longitudinal zu verfahren sind.

4. Verfahren insbesondere nach einem der Ansprüche 1, 2 oder 3,
**dadurch gekennzeichnet, daß** die Aufnahme der Platte im Pressenraum durch einzeln ansteuerbare und unabhängige heb- und senkbare Aktiv-Saugersysteme durchgeführt wird.

5. Vorrichtung zum Beschicken und Entleeren von Kurztaktpressen mit geschichtetem Preßgut (3), bestehend aus zwischen Belegtisch, Presse und Ablagetisch verfahrbaren Transporteinrichtung an der je Längsseite Klemmeinrichtungen (12) und Saugeinrichtungen (13) zur Handhabung des Preßgutes und der fertigen Platte (4) angeordnet sind, zur Durchführung des Verfahrens nach Anspruch 1,
**gekennzeichnet durch** die Kombination folgender Merkmale:
a) die Transporteinrichtung besteht aus einem gemeinsamen Transportwagen (8+9) für die Beschickung und Entleerung, zwei Tragholmen (11) für die daran angebrachten Klemm- und Saugeinrichtungen (12 und 13), und zwei Führungsschienen (10) für die daran angebrachten, längsverfahrbaren Tragholmen (11),
b) der Transportwagen (8+9) ist mit den Tragholmen (11) in den Führungsschienen (10) beidseitig der Preß-/Heizplatten (5 und 6) aus dem Beschickbereich (14) in den Preßbereich (15) und vom Preßbereich (15) zum Entleerbereich (16) elektromotorisch über einen Antriebsbalken (22) gezogen längsverfahrbar sowie gemeinsam aus Bereitstellungsachsen III-III in und zurück zu Beschick- und Entleerachsen II-II bzw. in und aus dem Beschickbereich (14), Preßbereich (15) und Entleerbereich (16) waagrecht in Querschienen (19) und abrollend an den Antriebsbalken (22) mittels den Antrieben (18) querverfahrbar angeordnet und
c) der Transportwagen (8+9) ist mit den Führungsschienen (10) und den darin längsverfahrbaren Tragholmen (11) mit Klemm- und Saugeinrichtungen (12 und 13) zur Längsmittenachse I-I **durch** die Vorgabe der Preßgutbreite (b) zur Beschick- und Entleerachse II-II in den Pressenraum (17) waagrecht variabel weit ein- und ausfahrbar ausgebildet.

6. Vorrichtung zum Beschicken und Entleeren von Kurztaktpressen mit geschichtetem Preßgut (3), bestehend aus zwischen Belegtisch, Presse und Ablagetisch verfahrbaren Transporteinrichtung an der je Längsseite Klemmeinrichtungen(12) und Saugeinrichtungen (13) zur Handhabung des Preßgutes und der fertigen Platte (4) angeordnet sind, zur Durchführung des Verfahrens nach Anspruch 2,
**gekennzeichnet durch** die Kombination folgender Merkmale:
a) die Transporteinrichtungen bestehen aus je einem Beschick- und Entleerwagen (8 und 9) und jeweils zwei Tragholmen (11) pro Längsseite für die daran angebrachten Klemm- bzw. Saugeinrichtungen (12 und 13), die in Führungsschienen (10) für die Longitudinalbewegung mit einem gemeinsamen Antrieb (21) und für die Transversalbewegung einzeln mit eigenem Antrieb (18) quer verfahrbar ausgebildet sind,
b) die Beschick- und Entleerwagen (8 und 9) sind mit ihren jeweils zwei Tragholmen (11) in Führungsschienen (10) beidseitig der Preß-/Heizplatte (5 und 6) und innerhalb des Beschickbereiches (14) **durch** den Pressenraum (17) zum Entleerbereich (16) gemeinsam elektromotorisch über einen Antriebsbalken (22) gezogen längsverfahrbar sowie für Beschickung und Entleerung einzeln aus Bereitstellungsachsen III-III in und zurück zu Beschick- und Entleerachsen II-II bzw. in und aus dem Beschickbereich (14), Preßbereich (15) und Entleerbereich (16) waagrecht in Querschienen (19) und rollend an Antriebsbalken (22) mittels den Antrieben (18) querverfahrbar angeordnet und
c) die Führungsschienen (10) mit den darin längsverfahrbaren Tragholmen (11) mit Klemm- und Saugeinrichtungen (12 und 13) sind zur Längsmittenachse I-I **durch** die Vorgabe der Preßgutbreite (b) in die Beschick- und Entleerachsen II-II bzw. in den Pressenraum (17) waagrecht variabel weit verfahrbar ausgebildet sind.

7. Vorrichtung insbesondere nach einem der Ansprüche 5 und 6,
**gekennzeichnet durch** die Aufnahme der fertigen Platte (4) von der unteren Preß-/Heizplatte (6) mittels einzeln ansteuerbare und unabhängig voneinander heb- und senkbarer Aktivsauger (20) die an Tragarmen (28) der zugehörigen Tragholme (11) angebracht sind.

8. Vorrichtung nach Anspruch 6 und 7,
**dadurch gekennzeichnet, daß** die longitudinal Bewegung der Beschickund Entleerwagen (8 und 9) mittels Zahnriemenverlauf oder mittels in den Führungsschienen (10) angebrachten Zahnstangen (36) abwälzenden Zahnräder (31) vorgesehen ist.

9. Vorrichtung nach den Ansprüchen 5 bis 8,
**dadurch gekennzeichnet, daß** die Beschick- und Entleerwagen (8 und 9) einzeln oder gemeinsam mit einen oder zwei Antrieben (21) ausgestattet über Antriebsbalken (22) ziehbar ausgebildet sind, wobei die Antriebsbalken (22) in einem eigenen Gestell (30) geführt sind.

10. Vorrichtung nach den Ansprüchen 5 bis 9,
**dadurch gekennzeichnet, daß** der Transportwagen (8+9) oder die Beschick- und Entleerwagen (8 und 9) für die Querbewegung in Querschienen (19) und abrollend an den Antriebsbalken (22) geführt sind.

11. Vorrichtung nach einem oder mehreren der Ansprüche 5 bis 10,
**dadurch gekennzeichnet, daß** die Beschick- und Entleerwagen (8 und 9) über pneumatisch, elektromagnetisch oder elektromotorisch angetriebene Kupplungen (29) an den Tragholmen (11) lösbar miteinander verbunden sind.

12. Vorrichtung nach einem oder mehreren der Ansprüche 5 bis 11,
**dadurch gekennzeichnet, daß** jeweils der stationäre Beschickwagen (8) oder der stationäre Entleerwagen (9) in den Führungsschienen (10) verriegelbar vorgesehen ist.

13. Vorrichtung nach einem oder mehreren der Ansprüche 5 bis 12,
**dadurch gekennzeichnet, daß** jeweils die rechte und linke Hälfte der Beschick- und Entleerwagen (8 und 9) durch Synchronisierung über elektronische Regelachsen oder über mechanische Ausgleichswellen bewegbar ausgebildet sind.

14. Vorrichtung nach den Ansprüchen 4 bis 13,
**dadurch gekennzeichnet, daß** zum Aufnehmen der fertigen Platten (4) die Aktivsauger (20) von einem Plattenende zum anderen Plattenende mit Zeitverzögerung und/oder mit stetig sich steigernden Ansaugkräften angesteuert ausgebildet sind.

15. Vorrichtung nach den Ansprüchen 5 bis 14,
**dadurch gekennzeichnet, daß** der Beschickwagen (8) an den Stirnseite, das heißt in Beschickrichtung vorn mit einem ein- und ausschwenkbaren Windschutz (24) versehen ist.

16. Vorrichtung nach Anspruch 15,
**dadurch gekennzeichnet, daß** der Windschutz (24) aus teleskopartig ineinander verschiebbaren Lamellen (25) gebildet ist.

17. Vorrichtung nach den Ansprüchen 5 bis 16,
**dadurch gekennzeichnet, daß** die linksseitigen und die rechtsseitigen Klemmeinrichtungen (8) aus je einem über die Längsseite sich erstreckendem das Preßgut (3) unterfassenden Tragbalken (26) und aus mehreren das Preßgut (3) auf den Tragbalken (26) auf- und absenkbaren Klemmbalken (27) bestehen.

18. Vorrichtung nach den Ansprüchen 5 bis 16,
**dadurch gekennzeichnet, daß** am Ende der Tragbalken (26) Längstragleisten pro Seite vorgesehen sind, die ebenfalls mit Klemmbalken (27) und Stützrollen (23) ausgestattet sind.

## Claims

1. A method for charging and discharging short-cycle or coating presses (1) with stratified material (3) to be pressed, which consists of supporting plates with improvement layers on the upper and lower side which are made of thermosetting synthetic resin or thermosetting synthetic resin films, in which a transport device movable between covering table, press and delivery table is provided with clamping (12) and suction devices (13), with the clamping devices grasping the material to be pressed at both longitudinal sides and moving the same into the pressroom and moving the same out by delivering the pressed material, with the finished board being sucked up by the retracted suction devices after the subsequent pressing process and the opening of the press, and being removed from the pressroom,
**characterized by** the combination of the following method steps:
a) the moving in and provision of the transport devices with the clamping and suction devices for clamping the material to be pressed in the charging zone and for receiving the board (4) in the pressroom (17) occur simultaneously and jointly after the opening of the pressroom by moving in a horizontal fashion transversal to the longitudinal central axis I-I from the readiness axes III-III in the charging and discharging axes II-II, with the clamping and suction devices being displaced transversally with their transport devices according to the width of the material to be pressed in a differently far manner into the pressroom, and the charging and discharging axes II-II are provided with an arrangement so as to be adjustable variably to the longitudinal central axis I-I;
b) the moving in and out of the transport devices with the clamping and suction devices after the clamping of the material to be pressed or the receiving of the board in the pressroom and out of the same occurs simultaneously with a common drive on the charging and discharging axes II-II;
c) the placing of the material to be pressed on the bottom press or heating plate and the placing of the board in the discharging zone occur simultaneously by releasing the clamping and suction devices and the horizontal transversal moving of the transport devices with the clamping and suction devices out of the press and discharging zone or of the charging and discharging axes II-II to the readiness axes III-III;
d) the transport devices with the clamping and suction devices are moved back together to the readiness axes III-III to the readiness position for a new press cycle.

2. A method for charging and discharging short-cycle or coating presses (1) with stratified material (3) to be pressed, which consists of supporting plates with improvement layers on the upper and lower side which are made of thermosetting synthetic resin or thermosetting synthetic resin films, in which a transport device movable between covering table, press and delivery table is provided with clamping (12) and suction devices (13), with the clamping devices grasping the material to be pressed at both longitudinal sides and moving the same into the pressroom and moving the same out by delivering the pressed material, with the finished board being sucked up by the retracted suction devices after the subsequent pressing process and the opening of the press, and being removed from the pressroom, especially as claimed in claim 1, **characterized by** the combination of the following method steps:
a) the moving in and provision of the two mutually separated transport devices with the clamping and suction devices in the charging zone or in the pressroom (17) as well as the clamping of the material to be pressed and the receiving of the board (4) occur in a manner which is independent from each other with respect to time by moving in on both sides in a horizontal fashion transversal to the longitudinal central axis I-I from the readiness axes III-III in the charging and discharging axes II-II, with the clamping and suction devices being displaced transversally with their transport devices according to the width of the material to be pressed in a differently far manner into the pressroom, and the charging and discharging axes II-II are provided with an arrangement so as to be adjustable variably to the longitudinal central axis I-I;
b) the moving of the material to be pressed into the pressroom and the moving of the board out of the pressroom occurs jointly and simultaneously when combining the two transport devices with a drive on the charging and discharging axes II-II;
c) after separating the two transport devices, the placing of the material to be pressed occurs on the bottom press or heating plate separately and independently from the placing of the board in the discharging zone by releasing the clamping or suction devices and the separate horizontal transversal moving of the transport devices with the clamping and suction devices out of the charging and discharging axes II-II to the readiness axes III-III depending on the required amount of time;
d) after moving out the charging transport device and the discharging transport device from the charging and discharging axes II-II into the readiness axes III-III, both transport devices are joined again for a new press cycle and are moved back to the starting position again and then separated from each other.

3. A method as claimed in claim 2, **characterized in that** the charging transport device and the discharging transport device can be displaced separately and time-independently from each other with their own drive transversally and longitudinally.

4. A method as claimed in one of the claims 1, 2 or 3, **characterized in that** the receiving of the board in the pressroom is performed by active suction systems which are individually triggerable and can be lifted or lowered independently.

5. An apparatus for charging and discharging short-cycle presses with stratified material (3) to be pressed, consisting of a transport device which is movable between covering table, press and delivery table and on which clamping devices (12) and suction devices (13) are arranged on each longitudinal side for handling the material to be pressed and the finished board, for the purpose of carrying out the method as claimed in claim 1,
**characterized by** a combination of the following features:
a) the transport device consists of a common transport carriage (8+9) for charging and discharging, two supporting braces (11) for the clamping and suction devices (12 and 13) attached thereto, and two guide rails (10) for the longitudinally displaceable supporting braces (11) which are attached thereto;
b) the transport carriage (8+9) is longitudinally displaceable with the supporting braces (11) in the guide rails (10) on either side of the press/heating plates (5 and 6) from the charging zone (14) to the press zone (15) and from the press zone (15) to the discharging zone (16) by being drawn in an electromotive manner by way of a drive beam (22) and is arranged in a transversally displaceable manner jointly from the readiness axes III-III into and back from the charging and discharging axes II-II and into and back from the charging zone (14), press zone (15) and discharging zone (16) horizontally in transversal rails (19) and rolling off on the drive beams (22) by means of the drives (18), and
c) the transport carriage (8+9) is arranged so as to be movable into and out of the press room (17) in a horizontally variable manner with the guide rails (10) and the supporting braces (11) which are longitudinally displaceable to the longitudinal central axis I-I therein with the clamping and suction devices (12 and 13) by predetermining the width (b) of the material to be pressed to the charging and discharging axis II-II.

6. An apparatus for charging and discharging short-cycle presses with stratified material (3) to be pressed, consisting of a transport device which is movable between covering table, press and delivery table and on which clamping devices (12) and suction devices (13) are arranged on each longitudinal side for handling the material to be pressed and the finished board (4), for the purpose of carrying out the method as claimed in claim 2,
**characterized by** a combination of the following features:
a) the transport devices each consists of one charging and discharging carriage (8 and 9) and two supporting braces (11) each per longitudinal side for the clamping and suction devices (12 and 13) attached thereto which are arranged so as to be transversally movable in guide rails (10) for the longitudinal movement with a common drive (21) and for the transversal movement individually with their own drive (18);
b) the charging and discharging carriages (8 and 9) are longitudinally displaceable with their two supporting braces (11) each in the guide rails (10) on either side of the press/heating plates (5 and 6) and within the charging zone (14) through the press zone (17) to the discharging zone (16) by being drawn in an electromotive manner by way of a drive beam (22) and are arranged in a transversally displaceable manner individually from the readiness axes III-III into and back from the charging and discharging axes II-II and into and back from the charging zone (14), press zone (15) and discharging zone (16) horizontally in transversal rails (19) and rolling off on the drive beams (22) by means of the drives (18), and
c) the guide rails (10) with the supporting braces (11) with the clamping and suction devices (12 and 13) arranged so as to be horizontally variably far movable to the longitudinal central axis I-I by predetermining the width (b) of the material to be pressed into the charging and discharges axes II-II or into the press room (17).

7. An apparatus especially as claimed in one of the claims 5 and 6,
**characterized by** receiving the finished board (4) from the bottom press/heating plate (6) by means of active suction means (20) which can be triggered individually, can be lifted and lowered independent from each other and are attached to the supporting arms (28) of the associated supporting braces (11).

8. An apparatus as claimed in claim 6 and 7, **characterized in that** the longitudinal movement of the charging and discharging carriage (8 and 9) is provided by means of a course of toothed belt or by means of toothed wheels rolling off on toothed racks attached to the guide rails (10).

9. An apparatus as claimed in claims 5 to 8, **characterized in that** the charging and discharging carriages (8 and 9) are provided with an arrangement so as to be equipped with one or two drives and being drawable by the drive beam (22) individually or jointly, with the drive beam (22) being guided in a separate frame (30).

10. An apparatus as claimed in the claims 5 to 9, **characterized in that** the transport carriage (8+9) or the charging and discharging carriages (8 and 9) are guided for the transversal movement in transversal rails (19) and rolling off on the drive beams (22).

11. An apparatus as claimed in one or several of the claims 5 to 10,
**characterized in that** the charging and discharging carriages (8 and 9) are mutually detachably connected to the supporting braces (11) via couplings (29) which are driven pneumatically, electromagnetically or electromotively.

12. An apparatus as claimed in one or several of the claims 5 to 11,
**characterized in that** the respective stationary charging carriage (8) or the stationary discharging carriage (9) is provided in a latchable manner in the guide rails (10).

13. An apparatus as claimed in one or several of the claims 5 to 12,
**characterized in that** the right and left half each of the charging and discharging carriages (8 and 9) are provided with a movable configuration by way of synchronization via electronic controlling shafts or via mechanical balancer shafts.

14. An apparatus as claimed in claims 4 to 13, **characterized in that** for receiving the finished plate (4) the active suction means (20) are provided with a configuration so as to be triggered with a time delay or with continuously rising suction forces from one board end to the other board end.

15. An apparatus as claimed in claims 5 to 14, **characterized in that** the charging carriage (8) is provided at the face side at the front, i.e. in the direction of charging, with a windbreaker that can be swiveled in and out.

16. An apparatus as claimed in claim 15, **characterized in that** the windbreaker (24) is formed by lamellae which can be slid into each other in a telescopic fashion.

17. An apparatus as claimed in claims 5 to 16, **characterized in that** the clamping devices (8) on the left and right side consist of a supporting beam (26) each which extend over the longitudinal side and grasp underneath the material (3) to be pressed and of several clamping beams (27) which lift or lower the material (3) to be pressed on the supporting beam (26).

18. An apparatus as claimed in claims 5 to 16, **characterized in that** at the end of the supporting beams (26) there are provided longitudinal supporting rails at each side which are also equipped with clamping beams (27) and supporting rollers (23).

## Revendications

1. Procédé pour le chargement et le déchargement de presses à cadence rapide ou d'enduction (1) avec de la matière à presser (3) enduite composée de plaques de support avec des couches d'ennoblissement en résine synthétique durcissable sur la face supérieure et inférieure ou des feuilles de résine synthétique durcissable, dans lequel il est prévu un dispositif de transport mobile entre la table de garnissage, la presse et la table de dépose avec des dispositifs de serrage (12) et d'aspiration (13), les dispositifs de serrage saisissent la matière à presser sur les deux côtés longitudinaux et l'introduisent dans la cavité de presse et l'extraient en déposant la matière à presser, la plaque finie est aspirée par les dispositifs d'aspiration introduits, soulevée et extraite de la cavité de presse après le pressage qui suit et l'ouverture de la presse,
**caractérisé en ce qu'**il comprend la combinaison des étapes de procédé suivantes :
a) l'introduction et la mise à disposition des dispositifs de transport avec les dispositifs de serrage et d'aspiration pour le serrage de la matière à presser dans la zone d'enduction et pour la réception de la plaque (4) dans la cavité de presse (17) sont simultanées et se produisent ensemble après l'ouverture de la cavité de presse par introduction transversale bilatérale à l'horizontale vers l'axe longitudinal médian I-I à partir d'axes de disponibilité III-III sur des axes de chargement et de déchargement II-II, les dispositifs de serrage et d'aspiration étant introduits plus ou moins loin transversalement dans la cavité de presse avec leurs dispositifs de transport en fonction de la largeur de la matière à presser et les axes de chargement et de déchargement II-II étant variables par rapport à l'axe longitudinal médian I-I,
b) l'introduction et l'extraction des dispositifs de transport avec les dispositifs de serrage et d'aspiration après le serrage de la matière à presser ou la réception de la plaque dans ou hors de la cavité de presse se font simultanément avec un entraînement commun sur les axes de chargement et de déchargement II-II,
c) la dépose de la matière à presser sur la platine de pressage et de chauffe inférieure et la dépose de la plaque dans la zone de déchargement se font simultanément par desserrage des dispositifs de serrage ou d'aspiration et extraction transversale à l'horizontale des dispositifs de transport avec les dispositifs de serrage et d'aspiration hors de la zone de pressage ou de déchargement ou des axes de chargement et de déchargement II-II vers les axes de disponibilité III-III et
d) les dispositifs de transport avec les dispositifs de serrage et d'aspiration sont ramenés ensemble dans la position de départ sur les axes de disponibilité III-III pour un nouveau cycle de pressage.

2. Procédé pour le chargement et le déchargement de presses à cadence rapide ou d'enduction (1) avec de la matière pressée (3) enduite composée de plaques de support avec des couches d'ennoblissement en résine synthétique durcissable sur la face supérieure et inférieure ou des feuilles de résine synthétique durcissable, dans lequel il est prévu un dispositif de transport mobile entre la table de garnissage, la presse et la table de dépose avec des dispositifs de serrage (12) et d'aspiration (13), les dispositifs de serrage saisissent la matière à presser sur les deux côtés longitudinaux et l'introduisent dans la cavité de presse et l'extraient en déposant la matière à presser, la plaque finie est aspirée par les dispositifs d'aspiration introduits, soulevée et extraite de la cavité de presse après le pressage qui suit et l'ouverture de la presse, en particulier selon la revendication 1,
**caractérisé en ce qu'**il comprend la combinaison des étapes de procédé suivantes :
a) l'introduction et la mise à disposition des deux dispositifs de transport séparés l'un de l'autre avec les dispositifs de serrage et d'aspiration dans la zone d'enduction ou dans la cavité de presse (17) et le serrage de la matière à presser et la réception de la plaque (4) ont lieu indépendamment l'un de l'autre dans le temps par introduction transversale bilatérale à l'horizontale vers l'axe longitudinal médian I-I à partir d'axes de disponibilité III-III sur des axes de chargement et de déchargement II-II, les dispositifs de serrage et d'aspiration étant introduits plus ou moins loin transversalement dans la cavité de presse avec leurs dispositifs de transport en fonction de la largeur de la matière à presser et les axes de chargement et de déchargement II-II étant variables par rapport à l'axe longitudinal médian I-I,
b) l'introduction de la matière à presser et l'extraction de la plaque hors de la cavité de presse se font ensemble et simultanément avec liaison des deux dispositifs de transport à un entraînement commun sur les axes de chargement et de déchargement II-II,
c) après séparation des deux dispositifs de transport, la dépose de la matière à presser sur la platine de pressage et de chauffage se fait séparément et indépendamment de la dépose de la plaque dans la zone de déchargement par desserrage des dispositifs de serrage ou des dispositifs d'aspiration et sortie séparée transversalement à l'horizontale des dispositifs de transport, selon le temps nécessaire, des axes de chargement et de déchargement II-II vers les axes de disponibilité III-III et
d) après la sortie du dispositif de transport et de chargement et du dispositif de transport et de déchargement des axes de chargement et de déchargement II-II vers les axes de disponibilité III-III, les deux dispositifs de transport sont à nouveau réunis pour un nouveau cycle de pressage et ramenés à la position de départ, puis séparés l'un de l'autre.

3. Procédé selon la revendication 2, **caractérisé en ce que** le dispositif de transport et de chargement et le dispositif de transport et de déchargement peuvent être déplacés séparément et indépendamment dans le temps dans le sens transversal et longitudinal avec leur propre entraînement.

4. Procédé selon l'une quelconque des revendications 1, 2 ou 3, **caractérisé en ce que** la réception de la plaque dans la cavité de presse est effectuée par des systèmes d'aspiration actifs mobiles verticalement vers le haut ou le bas, commandés individuellement et indépendants.

5. Dispositif pour le chargement et le déchargement de presses à cadence élevée avec de la matière à presser (3) enduite, composé d'un dispositif de transport mobile entre la table de garnissage, la presse et la table de dépose et sur chaque côté longitudinal duquel sont disposés des dispositifs de serrage (12) et des dispositifs d'aspiration (13) pour la manipulation de la matière à presser et de la plaque finie (4), pour la mise en oeuvre du procédé selon la revendication 1,
**caractérisé en ce qu'**il comprend la combinaison des caractéristiques suivantes :
a) le dispositif de transport se compose d'un chariot de transport commun (8+9) pour le chargement et le déchargement, de deux longerons portants (11) pour les dispositifs de serrage et d'aspiration (12 et 13) disposés dessus et de deux rails de guidage (10) pour les longerons portants (11) installés dessus et mobiles longitudinalement,
b) le chariot de transport (8+9) est disposé de façon à être mobile longitudinalement avec les longerons portants (11) dans les rails de guidage (10) de part et d'autre des platines de pressage et de chauffage (5 et 6) de la zone de chargement (14) vers la zone de pressage (15) et de la zone de pressage (15) vers la zone de déchargement (16) en étant tiré par un moteur électrique par l'intermédiaire d'une barre d'entraînement (22) et de façon à être mobile transversalement ensemble des axes de disponibilité III-III vers les axes de chargement et de déchargement II-II et retour et dans et hors de la zone de chargement (14), la zone de pressage (15) et la zone de déchargement (16), à l'horizontale dans des rails transversaux (19) en roulant sur les barres d'entraînement (22) au moyen des entraînements (18) et
c) le chariot de transport (8+9) avec les rails de guidage (10) et les longerons portants (11) mobiles longitudinalement dans ceux-ci avec les dispositifs de serrage et d'aspiration (12 et 13) est conçu pour être introduit et extrait plus ou moins loin à l'horizontale sur l'axe de chargement et de déchargement II-II dans la cavité de presse (17) vers l'axe longitudinal médian I-I par l'indication de la largeur (b) de la matière à presser.

6. Dispositif pour le chargement et le déchargement de presses à cadence élevée avec de la matière à presser (3) enduite, composé d'un dispositif de transport mobile entre la table de garnissage, la presse et la table de dépose et sur chaque côté longitudinal duquel sont disposés des dispositifs de serrage (12) et des dispositifs d'aspiration (13) pour la manipulation de la matière à presser et de la plaque finie (4), pour la mise en oeuvre du procédé selon la revendication 2,
**caractérisé en ce qu'**il comprend la combinaison des caractéristiques suivantes :
a) le dispositif de transport se compose d'un chariot de transport de chargement et d'un chariot de transport déchargement (8 et 9) séparés et de deux longerons portants (11) pour chacun sur chaque côté longitudinal pour les dispositifs de serrage et d'aspiration (12 et 13) disposés dessus, qui sont conçus pour se déplacer dans des rails de guidage (10) pour le déplacement longitudinal avec un entraînement commun (21) et séparément pour le déplacement transversal avec un entraînement propre (18),
b) les chariots de transport de chargement et de déchargement (8 et 9) sont disposés de façon à se déplacer dans le sens longitudinal avec leurs deux longerons portants (11) dans les rails de guidage (10) de part et d'autre des platines de pressage et de chauffage (5 et 6) et à l'intérieur de la zone de chargement (14) à travers la zone de pressage (17) vers la zone de déchargement (16) en étant tirés par un moteur électrique par l'intermédiaire d'une barre d'entraînement (22) et de façon à être mobiles transversalement séparément pour le chargement et le déchargement des axes de disponibilité III-III vers les axes de chargement et de déchargement II-II et retour et dans et hors de la zone de chargement (14), la zone de pressage (15) et la zone de déchargement (16), à l'horizontale dans des rails transversaux (19) et en roulant sur les barres d'entraînement (22) au moyen des entraînements (18) et
c) les rails de guidage (10) avec les longerons portants (11) mobiles longitudinalement dedans avec les dispositifs de serrage et d'aspiration (12 et 13) sont conçus pour être déplacés plus ou moins loin à l'horizontale sur les axes de chargement et de déchargement II-II et dans la cavité de presse (17) vers l'axe longitudinal médian I-I par l'indication de la largeur (b) de la matière à presser.

7. Dispositif selon l'une quelconque des revendications 5 et 6, **caractérisé en ce que** la plaque finie (4) est reçue par la platine de pressage et de chauffage inférieure (6) au moyen d'aspirateurs actifs (20) pouvant être commandés séparément et levés et abaissés indépendamment les uns des autres, qui sont disposés sur des bras portants (28) des longerons portants (11) correspondants.

8. Dispositif selon les revendications 6 et 7, **caractérisé en ce que** le déplacement longitudinal des chariots de chargement et de déchargement (8 et 9) est réalisé au moyen d'une courroie dentée ou au moyen de roues dentées (31) tournant dans des crémaillères (36) disposées dans les rails de guidage (10).

9. Dispositif selon les revendications 5 à 8, **caractérisé en ce que** les chariots de chargement et de déchargement (8 et 9) sont équipés d'un ou deux entraînements (21) et peuvent être tirés ensemble ou séparément par des barres d'entraînement (22), les barres d'entraînement (22) étant guidées dans leur propre bâti (30).

10. Dispositif selon les revendications 5 à 9, **caractérisé en ce que** les chariots de transport (8+9) ou les chariots de chargement et de déchargement (8 et 9) sont guidés pour le déplacement transversal dans des rails transversaux (19) ou roulent sur les barres d'entraînement (22).

11. Dispositif selon une ou plusieurs des revendications 5 à 10, **caractérisé en ce que** les chariots de chargement et de déchargement (8 et 9) sont reliés entre eux de manière amovible sur les longerons portants (11) par des accouplements (29) pneumatiques, électromagnétiques ou actionnés par un moteur électrique.

12. Dispositif selon une ou plusieurs des revendications 5 à 11, **caractérisé en ce que** le chariot de chargement (8) stationnaire ou le chariot de déchargement (9) stationnaire peut être verrouillé dans les rails de guidage (10).

13. Dispositif selon une ou plusieurs des revendications 5 à 12, **caractérisé en ce que** la moitié droite et la moitié gauche des chariots de chargement et de déchargement (8 et 9) sont mobiles selon une synchronisation par des axes de réglage électroniques ou des arbres d'équilibrage mécaniques.

14. Dispositif selon les revendications 4 à 13, **caractérisé en ce que** pour recevoir les plaques finies (4), les aspirateurs actifs (20) sont régulés d'une extrémité de la plaque à l'autre extrémité de la plaque avec une temporisation et (ou) avec une force d'aspiration augmentant de façon continue.

15. Dispositif selon les revendications 5 à 14, **caractérisé en ce que** le chariot de chargement (8) est pourvu sur la face frontale, c'est-à-dire à l'avant dans le sens du chargement, d'un paravent (24) pouvant être rabattu et relevé.

16. Dispositif selon la revendication 15, **caractérisé en ce que** le paravent (24) est formé de lamelles (25) coulissant de façon télescopique les unes dans les autres.

17. Dispositif selon les revendications 5 à 16, **caractérisé en ce que** les dispositifs de serrage (8) du côté gauche et du côté droit se composent chacun d'une barre porteuse (26) s'étendant au-delà du côté longitudinal et saisissant la matière à presser (3) par en-dessous et de plusieurs barres de serrage (27) pouvant être abaissées et relevées sur la matière à presser (3) sur les barres portantes (26).

18. Dispositif selon les revendications 5 à 16, **caractérisé en ce qu'**il est prévu à l'extrémité des barres portantes (26) des bandes portantes longitudinales de chaque côté, qui sont également équipées de barres de serrage (27) et de rouleaux de support (23).
